# EUROPÄISCHE PATENTSCHRIFT

(11) **EP 4 086 868 B1**
(45) Veröffentlichungstag und Bekanntmachung des Hinweises auf die Patenterteilung: **31.01.2024**
(21) Anmeldenummer: 21172678.1
(22) Anmeldetag: 07.05.2021
(51) Int. Cl.: G01N 29/12, G01N 29/44, G08B 13/16, G01N 29/04

(54) **VERFAHREN UND VORRICHTUNG ZUM DETEKTIEREN UND KLASSIFIZIEREN EINER STÖRSTELLE EINES GEHÄUSES**
METHOD AND APPARATUS FOR DETECTING AND CLASSIFYING A DEFECT OF A HOUSING
PROCÉDÉ ET DISPOSITIF DE DÉTECTION ET DE CLASSIFICATION D'UN POINT DE DÉFAILLANCE DANS UN LOGEMENT

(43) Veröffentlichungstag der Anmeldung: 09.11.2022
(73) Patentinhaber: MUSE Electronics GmbH, 1090 Wien (AT)
(72) Erfinder: ZACH, Gerald, 2120 Obersdorf (AT); RAINER, Max, 1050 Wien (AT); KIRSCHNER, Markus, 2340 Mödling (AT)
(74) Vertreter: Weiser & Voith Patentanwälte Partnerschaft

(56) Entgegenhaltungen:
- JP-A- H10 283 577
- US-A1- 2008 018 461
- US-A1- 2011 141 283
- US-A1- 2013 162 821
- US-A1- 2020 003 646

## Beschreibung

Die vorliegende Erfindung betrifft Verfahren und Vorrichtungen zum Detektieren und Klassifizieren von Störstellen eines Gehäuses mittels Schallwellen.

Die Überwachung der Integrität von Gerätegehäusen ist für sicherheitskritische Anwendungen im behördlichen, industriellen oder militärischen Bereich, insbesondere bei elektronischen Geräten wie Servern, Computern, Laptops, Notebooks und Smartphones, als "First Line of Defense" gegenüber Hackerangriffen von strategischer Bedeutung. Manipulationen an einem Gehäuse, beispielsweise durch Aufbohren, das Einbringen von Fremdkörpern wie Sonden oder Transmittern oder das Zerstören von Siegeln im Gehäuseinneren, können ein untrügliches Zeichen für solche Hackerangriffe sein. Bei einer großen Zahl von zu überwachenden Gerätegehäusen, z.B. in Serverschränken oder im Feld, oder wenn von außen nicht erkennbar, bleiben solche physischen Manipulationen jedoch häufig unentdeckt. Auch Beschädigungen beim Einsatz im Feld, die beispielsweise zu undichten Stellen führen, bleiben häufig verborgen.

Zur Integritätsüberwachung von Strukturen ist die Verwendung von Schallwellen in Form von Körperschall oder Luftschall bekannt. So offenbart US 2020/003646 A1 eine Vorrichtung und ein Verfahren zum Detektieren von Störungen in einem Rohr oder in einem Kanal, wobei unter anderem auch mit akustischen Signalen auf Störungen überwacht wird.

Bekannte akustische Störstellen-Detektionsverfahren sind jedoch nicht in der Lage, die detektierten Störstellen zu klassifizieren, d.h. ob es sich beispielsweise um einen zusätzlichen, in den Gehäuseinnenraum eingebrachten Fremdkörper handelt, wie eine Sonde, ein Kabel oder einen Transmitter, oder um eine Fehlstelle wie ein Loch, einen Siegelbruch, einen Sprung in der Gehäusewand usw.

Die Erfindung setzt sich zum Ziel, Störstellen-Detektionsverfahren und -vorrichtungen zu schaffen, die in der Lage sind, die detektierten Störstellen nach Art der Störstelle zu klassifizieren.

Dieses Ziel wird in einem ersten Aspekt mit einem Verfahren zum Detektieren und Klassifizieren einer Störstelle eines Gehäuses nach Anspruch 1 erreicht, insbesondere für ein elektronisches Gerät, umfassend:
Anordnen zumindest eines Lautsprechers und zumindest eines Mikrophons im Innenraum des Gehäuses;
Messen eines Referenz-Frequenzgangs der Schallübertragung von diesem Lautsprecher zu diesem Mikrophon;
zu einem späteren Zeitpunkt, Messen eines aktuellen Frequenzgangs der Schallübertragung von diesem Lautsprecher zu diesem Mikrophon;
Ermitteln eines Differenz-Frequenzgangs als Abweichung zwischen dem aktuellen Frequenzgang und dem Referenz-Frequenzgang; und
Ermitteln eines Maßes des Differenz-Frequenzgangs und, wenn dieses einen vorgegebenen Detektionsschwellwert übersteigt:
   Detektieren einer Störstelle,
   Berechnen eines Verhältnisses der Signalenergie eines hochfrequenten Frequenzbands des Differenz-Frequenzgangs zur Signalenergie eines niederfrequenten Frequenzbands des Differenz-Frequenzgangs, und
   wenn das Verhältnis einen vorgegebenen Klassifikationsschwellwert übersteigt:
      Klassifizieren der Störstelle als Fremdkörper im Gehäuse,
      andernfalls Klassifizieren der Störstelle als Fehlstelle im Gehäuse.

Die Erfindung beruht auf der Erkenntnis, dass Fehlstellen im Gehäuse, z.B. Löcher, Sprünge oder Aussparungen in der Gehäuseinnenwand oder entfernte Objekte wie Siegel, zu einer signifikanten Änderung des niederfrequenten Bereichs der Schallübertragung im Gehäuseinnenraum führt. Im Gegensatz dazu bewirken zusätzlich eingebrachte Fremdkörper, z.B. Sonden, Kabel, Transmitter usw. im niederfrequenten Bereich der Schallübertragung nur eine geringe Änderung. Dieses Verhalten kann zur Klassifizierung von Störstellen in Fehlstellen oder Fremdkörper herangezogen werden, und zwar durch Auswertung der Relation zwischen einem hochfrequenten und einem niederfrequenten Frequenzband des Schallübertragungs-Frequenzgangs im Gehäuseinnenraum. Das erfindungsgemäße Verfahren erlaubt dadurch eine rasche und zuverlässige Klassifizierung von detektierten Störstellen.

Bevorzugt liegt das niederfrequente Frequenzband unterhalb von 400 - 500 Hz und das hochfrequente Frequenzband oberhalb von 400 - 500 Hz. Eine solche Diskriminationsfrequenz führt zu einer besonders sicheren Unterscheidung und damit Klassifizierung der Störstellen.

Besonders günstig ist es, wenn das niederfrequente Frequenzband 250 Hz bis 450 Hz und das hochfrequente Frequenzband 450 Hz bis 2 kHz ist. Das Verhältnis der Signalenergien in diesen Frequenzbändern hat sich als sehr zuverlässiges Unterscheidungskriterium für detektierte Störstellen erwiesen.

Als das genannte Maß für die Detektion einer Störstelle könnte beispielsweise die Maximalamplitude des Differenz-Frequenzgangs verwendet werden. Bevorzugt wird als das genannte Maß jedoch die gesamte Signalenergie des Differenz-Frequenzgangs, d.h. sein Integral über die Frequenz, herangezogen.

Gemäß einer weiteren vorteilhaften Ausführungsform der Erfindung kann aus dem genannten Maß überdies auch gleich die Größe der Störstelle bestimmt werden.

Der Referenz-Frequenzgang und der aktuelle Frequenzgang der Schallübertragung im Gehäuseinnenraum vom Lautsprecher zum Mikrophon können auf verschiedenste Arten gemessen werden. In einer ersten Ausführungsform der Erfindung wird der jeweilige Frequenzgang mittels eines vom Lautsprecher ausgestrahlten Chirps gemessen. In einer zweiten Ausführungsform kann der jeweilige Frequenzgang mittels eines vom Lautsprecher ausgestrahlten Dirac-Impulses gemessen werden. Die Messung mittels Chirps dauert etwas länger, führt jedoch zu genaueren Ergebnissen und die vom Mikrophon empfangene und über der Zeit aufgezeichnete Schallleistung gibt direkt den Frequenzgang wieder, wenn der Chirp - z.B. linear oder logarithmisch - über die Frequenz durchgestimmt wird. Die Messung mittels Dirac-Impulses geht schneller, benötigt aber eine anschließende Fouriertransformation zur Berechnung des Frequenzgangs aus der vom Mikrophon über der Zeit aufgezeichneten Impulsantwort.

Die Berechnung der genannten Signalenergien - sei es für die Berechnung des Detektionsmaßes oder in den hoch- und niederfrequenten Frequenzbändern - kann auf unterschiedliche Arten erfolgen. Beispielsweise kann der Differenz-Frequenzgang quadriert und über den jeweiligen Frequenzbereich integriert werden. Bevorzugt wird die jeweilige Signalenergie jedoch durch Absolutwertbildung des Differenz-Frequenzgangs und Integration über den jeweiligen Frequenzbereich berechnet.

In jeder der genannten Ausführungsformen kann die Zuverlässigkeit der Detektion und Klassifizierung noch weiter erhöht werden, wenn der Referenz-Frequenzgang und der aktuelle Frequenzgang jeweils über mehrere Einzelmessungen gemittelt werden, beispielsweise über zwei oder mehr unmittelbar aufeinanderfolgende Einzelmessungen.

In einem zweiten Aspekt schafft die Erfindung eine Vorrichtung zum Detektieren und Klassifizieren einer Störstelle eines Gehäuses nach Anspruch 10 , insbesondere für ein elektronisches Gerät, umfassend:
zumindest einen Lautsprecher und zumindest ein Mikrophon zur Anordnung im Innenraum des Gehäuses; und
einen an diesen Lautsprecher angeschlossenen Signalgenerator und eine an dieses Mikrophon angeschlossene Auswerteschaltung;
wobei die Auswerteschaltung dafür ausgebildet ist,
einen Referenz-Frequenzgang der Schallübertragung von diesem Lautsprecher zu diesem Mikrophon zu messen,
zu einem späteren Zeitpunkt einen aktuellen Frequenzgang der Schallübertragung von diesem Lautsprecher zu diesem Mikrophon zu messen,
einen Differenz-Frequenzgang als Abweichung zwischen dem aktuellen Frequenzgang und dem Referenz-Frequenzgang sowie ein Maß des Differenz-Frequenzgangs zu ermitteln und, wenn dieses Maß einen vorgegebenen Detektionsschwellwert übersteigt:
   eine Störstelle zu detektieren,
   ein Verhältnis der Signalenergie eines hochfrequenten Frequenzbands des Differenz-Frequenzgangs zur Signalenergie eines niederfrequenten Frequenzbands des Differenz-Frequenzgangs zu berechnen und,
   wenn das Verhältnis einen vorgegebenen Klassifikationsschwellwert übersteigt:
      die Störstelle als Fremdkörper im Gehäuse zu klassifizieren,
      andernfalls die Störstelle als Fehlstelle im Gehäuse zu klassifizieren.

Bezüglich der Vorteile und bevorzugter Ausgestaltungen der erfindungsgemäßen Vorrichtung wird auf die obigen Ausführungen zu dem von der Vorrichtung ausgeführten Verfahren verwiesen.

Die Erfindung wird nachstehend anhand von in den beigeschlossenen Zeichnungen dargestellten Ausführungsbeispielen näher erläutert. In den Zeichnungen zeigen:
Fig. 1 ein Blockschaltbild der in einem zu überwachenden-Gerätegehäuse eingebauten Vorrichtung der Erfindung zur Durchführung des Verfahrens der Erfindung;
Fig. 2 ein Flussdiagramm des Verfahrens der Erfindung;
Fig. 3 ein Beispiel eines Referenz-Frequenzgangs und eines aktuellen Frequenzgangs in einem Amplituden/Frequenz-Diagramm;
Fig. 4 ein Beispiel eines Differenz-Frequenzgangs für ein Gehäuse ohne Störstelle in einem Amplituden/Frequenz-Diagramm;
Fig. 5 ein Beispiel eines Differenz-Frequenzgangs für ein Gehäuse mit Störstelle in einem Amplituden/Frequenz-Diagramm;
Fig. 6a bis 6d vier Beispiele von Verteilungen der Signalenergien über jeweils vier Frequenzbänder des Differenz-Frequenzgangs im Falle einer Fehlstelle als Störstelle; und
die Fig. 7a bis 7d vier Beispiele von Verteilung der Signalenergien über jeweils vier Frequenzbänder des Differenz-Frequenzgangs im Falle eines Fremdkörpers als Störstelle.

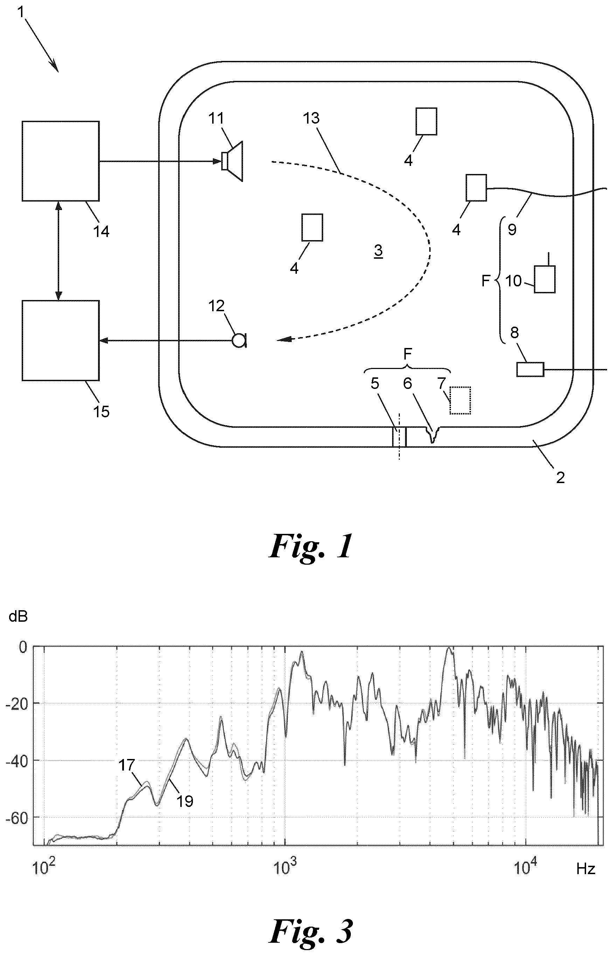

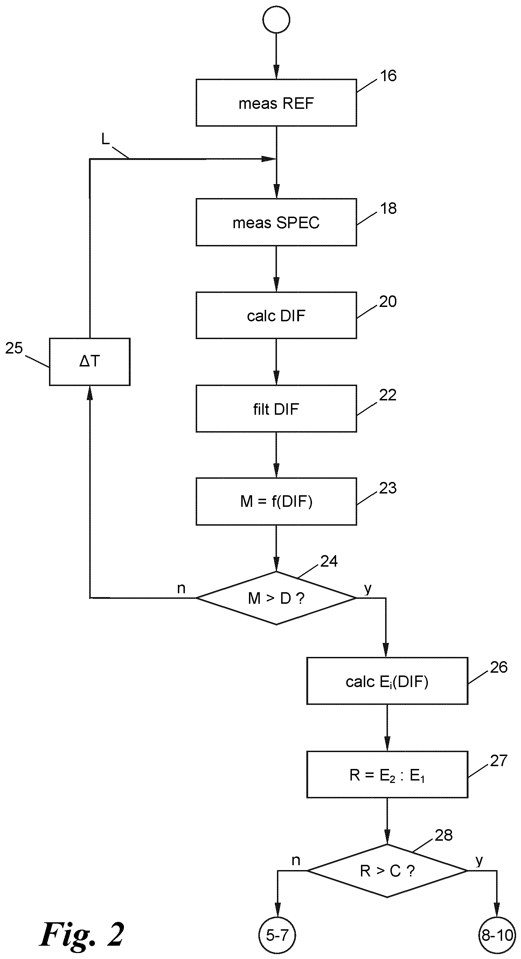

Fig. 1 zeigt eine Vorrichtung 1, die gleichzeitig zur Durchführung des in Fig. 2 gezeigten Verfahrens geeignet ist. Die Vorrichtung 1 dient zur Integritätsüberwachung eines Gehäuses 2, um daran Störstellen F zu detektieren und zu klassifizieren.

Das Gehäuse 2 hat einen Innenraum 3 zur Aufnahme technischer Komponenten 4. Beispielsweise ist das Gehäuse 2 das Gehäuse eines Computers, Servers, Notebooks, Laptops, Smartphones od.dgl. Das Gehäuse 2 ist nicht notwendigerweise geschlossen. Der Innenraum 3 ist mit einem Gas zur Schallausbreitung darin gefüllt, zumeist einfach mit Umgebungsluft, das bzw. die entweder voreingefüllt ist oder durch Öffnungen des Gehäuses 2 in den Innenraum 3 eindringt.

Bei den Störstellen F, auf die das Gehäuse 2 überwacht werden soll, kann es sich entweder um Fehlstellen handeln, also Stellen, an denen etwas im oder am Gehäuse 2 "fehlt", wie ein Loch 5, ein Riss oder Sprung 6 in der Wand des Gehäuses 2, eine aus dem Gehäuse 2 entnommene technische Komponente 4, ein entferntes oder gebrochenes Siegel od.dgl. Oder die Störstelle F ist ein Fremdkörper, also etwas Zusätzliches im Gehäuse 2, beispielsweise eine Sonde 8, ein Anzapf-Kabel ("tap wire") 9, ein Transmitter 10 od.dgl. Wenn eine Komponente 4 ihre Position im Gehäuse verändert, z.B. aufgrund eines Stoßes lose wird und sich verlagert, dann entsteht an ihrem ursprünglichen Ort eine Fehlstelle und sie bildet an ihrem neuen Ort einen Fremdkörper.

Zur Detektion und Klassifikation der Störstellen F umfasst die Vorrichtung 1 zumindest einen im Innenraum 3 des Gehäuses 2 angeordneten Lautsprecher 11 und - in einem Abstand dazu - zumindest ein Mikrophon 12, sodass zwischen diesen beiden eine Schallübertragung 13 erfolgen kann. Die Schallübertragung 13 ("akustische Übertragungsstrecke") umfasst sowohl den Direktschall vom Lautsprecher 11 zum Mikrophon 12 als auch jegliche Form von indirektem Schall, der durch Reflexionen an den Innenwänden des Gehäuses 2 bzw. an Komponenten 4 im Innenraum 3 des Gehäuses 2 vom Lautsprecher 11 zum Mikrophon 12 gelangt. Um möglichst viel an indirektem Schall zu erfassen und damit den Innenraum 3 weiträumig abzudecken, können der Lautsprecher 11 und/oder das Mikrophon 12 omnidirektional sein oder entsprechend breite Richtcharakteristiken haben.

Der Lautsprecher 11 ist an den Ausgang eines Signalgenerators 14 und das Mikrophon 12 an den Eingang einer Auswerteschaltung 15 angeschlossen. Der Signalgenerator 14 und die Auswerteschaltung 15 können zwecks Synchronisation miteinander kommunizieren. Der Signalgenerator 14 kann zusammen mit der Auswerteschaltung 15 beispielsweise als Mikroprozessor realisiert oder auf einem solchen softwaretechnisch implementiert sein. Auch können der Signalgenerator 14 und die Auswerteschaltung 15 von bereits vorhandenen technischen Komponenten 4 des Geräts im Gehäuse 2 realisiert sein.

Wenn die Vorrichtung 1 mehr als einen Lautsprecher 11 und mehr als ein Mikrophon 12 umfasst, kann zwischen jeweils einem Lautsprecher 11 und einem Mikrophon 12 eine Schallübertragung 13 gemessen und in der hier beschriebenen Art und Weise ausgewertet werden, um Störstellen F zu detektieren und zu klassifizieren. Die jeweiligen Lautsprecher/Mikrophon-Paare 11, 12 können dabei an einen gemeinsamen oder jeweils einen eigenen Signalgenerator 14 und an eine gemeinsame oder jeweils eine eigene Auswerteschaltung 15 angeschlossen sein. Auch können unterschiedliche Anzahlen von Lautsprechern 11 und Mikrophonen 12 verwendet werden, beispielsweise ein Lautsprecher 11 für mehrere Schallübertragungen 13 zu mehreren Mikrophonen 12 oder mehrere Lautsprecher 11 für mehrere Schallübertragungen 13 zu einem Mikrophon 12.

Unter Bezugnahme auf Fig. 2 wird mithilfe der Vorrichtung 1 in einem ersten Schritt 16 für ein "gesundes", d.h. nichtmanipuliertes Gehäuse 2 ohne Störstellen F ein Referenz-Frequenzgang REF bzw. 17 (Fig. 3) der Schallübertragung 13 zwischen dem bzw. einem Lautsprecher 11 und dem bzw. einem Mikrophon 12 gemessen. Dazu gibt es zwei Möglichkeiten. Einerseits kann der Signalgenerator 14 einen Chirp erzeugen, der vom Lautsprecher 11 abgestrahlt wird, also ein monofrequentes Signal, dessen Frequenz über den zu vermessenden Frequenzbereich über die Zeit durchgestimmt wird. Die vom Mikrophon 12 aufgenommene Schallamplitude bzw. -leistung wird über der Zeit aufgezeichnet und gibt unmittelbar den Referenz-Frequenzgang 17 über der Frequenz wieder. Oder der Signalgenerator 14 erzeugt einen Dirac-Impuls, welchen der Lautsprecher 11 abstrahlt, und die vom Mikrophon 12 über der Zeit aufgezeichnete Impulsantwort wird anschließend fouriertransformiert, um so den Referenz-Frequenzgang 17 über über der Frequenz zu ermitteln. Das ausgestrahlte Signal könnte auch ein codiertes Signal sein, z.B. wird es nochmals mit einem höherfrequenten Signal (z.B. 40 kHz) "zerhackt" und so zu einem Pseudo-Rauschsignal. Der gemessene Referenz-Frequenzgang 17 wird für die spätere Störstellenüberwachung gespeichert, beispielsweise in einem Speicher der Auswerteeinheit 15.

Der Referenz-Frequenzgang 17 wird beispielsweise im hörbaren akustischen Frequenzbereich von 20 Hz - 20 KHz ermittelt, kann aber auch - alternativ oder zusätzlich - den Infraschallbereich unterhalb von 20 Hz oder den Ultraschallbereich über 20 KHz, z.B. bis zu 100 KHz oder 200 KHz, umfassen. Die Wahl des Frequenzbereichs wird u.a. bestimmt durch die Gehäusedimensionen am unteren Ende und die Größe noch detektierbarer Störstellen am oberen Ende.

Optional kann der Referenz-Frequenzgang 17 aus mehreren Einzelmessungen, d.h. mittels mehrerer aufeinanderfolgender Chirps oder Dirac-Impulse, gemittelt werden. Auch ist es möglich, den Referenz-Frequenzgang 17 vor seiner weiteren Verwendung zu filtern und/oder zu gewichten, beispielsweise zum Ausfiltern von Trittschall unterhalb von z.B. 200 Hz, zum Glätten von Messwertausreißern oder Notches, oder zum Ausfiltern von Frequenzbereichen, in denen das Empfangssignal des Mikrophons 12 ein für sinnvolle Auswertungen zu geringes Signal/RauschVerhältnis liefert.

Um das Auftreten einer Störstelle F zu detektieren, wird zu einem beliebigen späteren Zeitpunkt in einem Schritt 18 ein aktueller Frequenzgang SPEC bzw. 19 (Fig. 3) der Schallübertragung 13 zwischen Lautsprecher 11 und Mikrophon 12 gemessen. Im Messschritt 18 wird dasselbe Messverfahren angewandt, das für die Messung des Referenz-Frequenzgangs 17 im Schritt 16 verwendet worden ist, um den aktuellen Frequenzgang 19 und den Referenz-Frequenzgang 17 miteinander vergleichbar zu machen. Bei der Messung 18 des aktuellen Frequenzgangs 19 kann die (optionale) Mittelung über mehrere Einzelmessungen oder die (optionale) Filterung, Gewichtung bzw. Glättung entfallen, um Rechenzeit zu sparen.

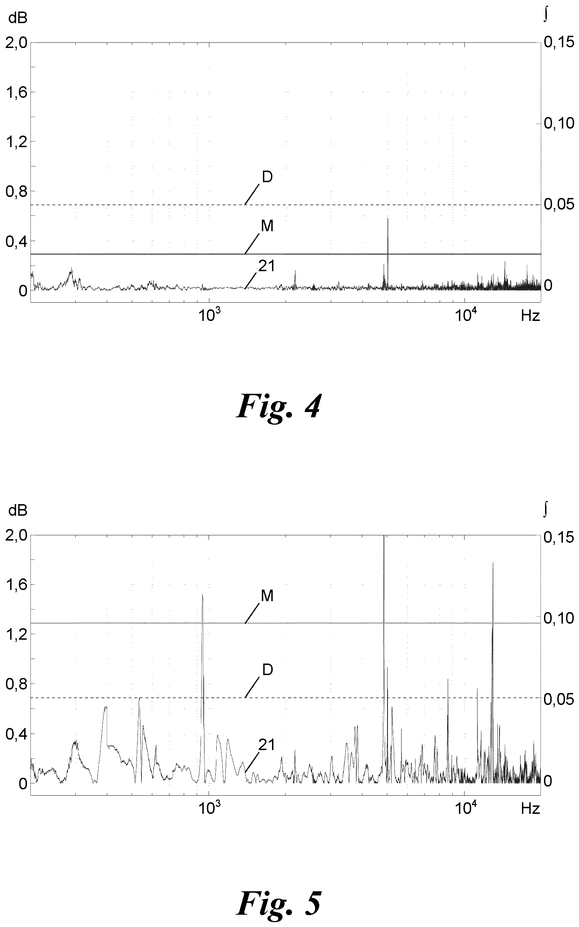

Nach Messung des aktuellen Frequenzgangs 19 wird im Schritt 20 ein Differenz-Frequenzgang DIF bzw. 21 (Fig. 4, 5) aus der Abweichung des aktuellen Frequenzgangs 19 vom Referenz-Frequenzgang 17 ermittelt. Der Differenz-Frequenzgang 21 kann beispielsweise eine einfache (frequenzweise) Differenz (Subtraktion) zwischen dem aktuellen Frequenzgang 19 und dem Referenz-Frequenzgang 17 sein oder auch ein anderes Abweichungsmaß, beispielsweise die (frequenzweisen) absoluten oder quadrierten Differenzen od.dgl. zwischen den beiden Kurven 17 und 19. In einem optionalen Schritt 22 kann der Differenz-Frequenzgang 21 gewichtet bzw. gefiltert werden, falls gewünscht.

Anschließend wird im Schritt 23 ein globales Maß M (Fig. 4, 5) des Differenz-Frequenzgangs 21 berechnet und im Schritt 24 mit einem Detektionsschwellwert D verglichen, um das Vorliegen einer Störstelle F zu detektieren. Das Maß M kann beispielsweise der Maximal-Amplitudenwert des Differenz-Frequenzgangs 21 sein, ein Mittelwert des Differenz-Frequenzgangs 21, nachdem dieser einer Absolutwertbildung (Betragsbildung) unterzogen wurde, oder die gesamte "Signalenergie" E des Differenz-Frequenzgangs 21. Letztere kann beispielsweise dadurch berechnet werden, dass der Differenz-Frequenzgang 21 zuerst einer Absolutwertbildung unterzogen und dann über den gesamten interessierenden Frequenzbereich, z.B. 20 Hz bis 20 KHz, integriert wird.

Wenn der Vergleichsschritt 24 ergibt, dass das globale Maß M des Differenz-Frequenzgangs 21 nicht über dem Schwellwert D liegt (Zweig "n"), dann wurde keine Störstelle F detektiert und das Verfahren kehrt - gegebenenfalls nach Ablauf einer Wartezeit ΔT im Schritt 25 - in einer Schleife L zum Schritt 18 für ein erneutes Messen eines aktuellen Frequenzgangs 19 zurück. Die Wartezeit ΔT kann beispielsweise ein paar Sekunden oder Minuten betragen, so dass das Gehäuse 2 in der Schleife L mit diesen Intervallen periodisch überwacht wird.

Ergibt anderseits der Vergleichsschritt 24, dass das Maß M größer als der gewählte Schwellwert D ist (Zweig "y"), wurde das Vorliegen einer Störquelle F erkannt und es wird zum Klassifikationsabschnitt 26 - 28 des Verfahrens übergegangen.

Der Detektionsschwellwert D kann empirisch gewählt und optional auch mithilfe einer automatischen Regelung adaptiv nachgeführt werden: Im fehlerfreien Falle, d.h. ohne Störstelle F, kann er beispielsweise so weit reduziert werden, dass bereits kleine Veränderungen am Gehäuse 2, d.h. das Auftreten kleiner Störstellen F, detektiert werden können.

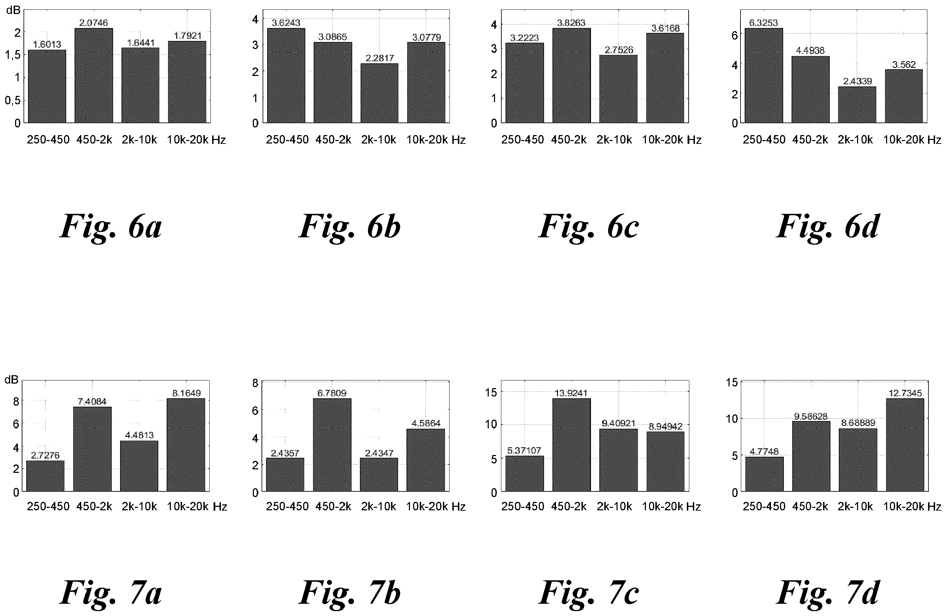

Im Klassifikationsabschnitt wird in einem Schritt 26 der Differenz-Frequenzgang 21 in zwei oder mehr Frequenzbänder Bᵢ (i = 1, 2, ...) unterteilt, beispielsweise in vier Frequenzbänder B₁ - B₄ (Fig. 6a - 6d und 7a - 7d), und in jedem Frequenzband Bᵢ wird eine Signalenergie Eᵢ des Differenz-Frequenzgangs 21 berechnet. Dazu kann beispielsweise der Differenz-Frequenzgang 21 einer (frequenzweisen) Absolutwertbildung unterzogen und dann über die Frequenzen des jeweiligen Frequenzbands Bᵢ zur jeweiligen Signalenergie Eᵢ integriert werden. Auch andere Energiemaße bzw. -einheiten können für die Signalenergien Eᵢ in den Frequenzbändern Bᵢ verwendet werden, beispielsweise durch Quadrierung anstelle von Absolutwertbildung und anschließende Integration des quadrierten Differenz-Frequenzgangs 21 über das jeweilige Frequenzband Bᵢ, od.dgl.

Im nächsten Schritt 27 wird ein Verhältnis R zwischen der Signalenergie Eᵢ₊ₖ (k = 1, 2, ...) in einem hochfrequenten Frequenzband Bᵢ₊ₖ und der Signalenergie Eᵢ in einem niederfrequenten Frequenzband Bᵢ berechnet. Als besonders aussagekräftig für die Störstellenklassifizierung hat sich eine Auswertung in den zwei tiefsten Frequenzbändern B₁ und B₂ einer zwei- oder mehrbandigen Frequenzgangsaufteilung erwiesen, insbesondere im niederfrequenten Frequenzband B₁ unterhalb einer Diskriminationsfrequenz von 400 - 500 Hz, insbesondere 450 Hz, und im darüberliegenden hochfrequenten Frequenzband B₂ oberhalb dieser Diskriminationsfrequenz. Besonders günstig ist die Auswertung im niederfrequenten Frequenzband B₁ = 250 - 450 Hz und B₂ = 450 Hz - 2 KHz.

Die Fig. 6a bis 6d zeigen vier verschiedene Beispiele einer jeweils vierbandigen Signalenergieauswertung des Differenz-Frequenzgangs 21 in den Frequenzbändern B₁ = 250 - 450 Hz, B₂ = 450 Hz - 2 KHz, B₃ = 2 KHz - 10 KHz und B₄ = 10 KHz - 20 KHz bei Vorhandensein einer Fehlstelle 5 - 7 als Störstelle F, u.zw. eines Lochs 5 mit einem Durchmesser von 14 mm an vier verschiedenen Stellen in der Wand des Gehäuses 2.

Die Fig. 7a - 7d zeigen im Vergleich dazu vier verschiedene Beispiele einer jeweils vierbandigen Signalenergieauswertung des Differenz-Frequenzgangs 21 in denselben Frequenzbändern B₁ - B₄ bei Vorhandensein eines Fremdkörpers 8 - 10 als Störstelle F, u.zw. eines würfelförmigen Transmitters 10 mit einer Kantenlänge von 5 mm an vier verschiedenen Stellen im Gehäuse 2.

Wie aus den Fig. 6a - 6d und 7a - 7d ersichtlich, lässt sich ein Fremdkörper 8 - 10 im Gegensatz zu einer Fehlstelle 5 - 7 an einem signifikanten Abfall der Signalenergie E₁ im niederfrequenten Frequenzband B₁ gegenüber der Signalenergie E₂ in einem hochfrequenten (hier: dem nächsthöheren) Frequenzband B₂ erkennen. Das Verhältnis R = E₂ : E₁ kann daher als Kriterium für die Unterscheidung zwischen Fremdkörpern und Fehlstellen und damit zur Klassifizierung der Störstelle F herangezogen werden.

In dem Vergleichsschritt 28 wird daher das im Schritt 27 ermittelte Verhältnis R mit einem Klassifikationsschwellwert C verglichen. Übersteigt das Verhältnis R den Klassifikationsschwellwert C (Zweig "y"), dann ist die Störstelle F ein Fremdkörper 8 - 10, wenn nicht (Zweig "n"), dann ist die Störstelle F eine Fehlstelle 5 - 7.

Zusätzlich kann aus dem zuvor ermittelten globalen Maß M des Differenz-Frequenzgangs 21 auf die Größe der Störstelle F, beispielsweise die Größe des Fremdkörpers 8 - 10 oder der Fehlstelle 5 - 7, geschlossen werden: Je größer das Maß M, desto größer ist die Störstelle F.

Der Klassifikationsschwellwert C kann empirisch ermittelt werden und hängt auch von dem gewählten Maß der Signalenergien Eᵢ ab. Wenn letztere z.B. durch Absolutwertbildung und Integration eines Differenz-Frequenzgangs 21 aus Frequenzgängen 17, 19 berechnet wurden, die wiederum aus den Betragsanteilen von Fourier-Transformationen von vom Mikrophon 11 aufgezeichneten Impulsantworten ermittelt wurden, liegt der Klassifikationsschwellwert C beispielsweise im Bereich von 1,5 - 3 dB, insbesondere bei etwa 2 dB.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Verfahren zum Detektieren und Klassifizieren einer Störstelle (F) eines Gehäuses (2), insbesondere für ein elektronisches Gerät, umfassend:
Anordnen zumindest eines Lautsprechers (11) und zumindest eines Mikrophons (12) im Innenraum (3) des Gehäuses (2);
charakterisiert durch
Messen eines Referenz-Frequenzgangs (17) der Schallübertragung (13) von diesem Lautsprecher (11) zu diesem Mikrophon (12) ;
zu einem späteren Zeitpunkt, Messen eines aktuellen Frequenzgangs (19) der Schallübertragung (13) von diesem Lautsprecher (11) zu diesem Mikrophon (12);
Ermitteln eines Differenz-Frequenzgangs (21) als Abweichung zwischen dem aktuellen Frequenzgang (19) und dem Referenz-Frequenzgang (17); und
Ermitteln eines Maßes (M) des Differenz-Frequenzgangs (21) und, wenn dieses einen vorgegebenen Detektionsschwellwert (D) übersteigt:
Detektieren einer Störstelle (F),
Berechnen eines Verhältnisses (R) der Signalenergie (Eᵢ₊ₖ) eines hochfrequenten Frequenzbands (Bᵢ₊ₖ) des Differenz-Frequenzgangs (21) zur Signalenergie (Eᵢ) eines niederfrequenten Frequenzbands (Bᵢ) des Differenz-Frequenzgangs (21), und
wenn das Verhältnis (R) einen vorgegebenen Klassifikationsschwellwert (C) übersteigt:
Klassifizieren der Störstelle (F) als Fremdkörper (8 - 10) im Gehäuse (2),
andernfalls Klassifizieren der Störstelle (F) als Fehlstelle (5 - 7) im Gehäuse (2).

2. Verfahren nach Anspruch 1, **dadurch gekennzeichnet, dass** das niederfrequente Frequenzband (Bᵢ) unterhalb von 400 - 500 Hz und das hochfrequente Frequenzband (Bᵢ₊ₖ) oberhalb von 400 - 500 Hz liegt.

3. Verfahren nach Anspruch 1 oder 2, **dadurch gekennzeichnet, dass** das niederfrequente Frequenzband (Bᵢ) 250 Hz bis 450 Hz und das hochfrequente Frequenzband (Bᵢ₊ₖ) 450 Hz bis 2 kHz ist.

4. Verfahren nach einem der Ansprüche 1 bis 3, **dadurch gekennzeichnet, dass** das genannte Maß (M) die gesamte Signalenergie (E) des Differenz-Frequenzgangs (21) ist.

5. Verfahren nach einem der Ansprüche 1 bis 4, **dadurch gekennzeichnet, dass** aus dem genannten Maß (M) die Größe der Störstelle (F) bestimmt wird.

6. Verfahren nach einem der Ansprüche 1 bis 5, **dadurch gekennzeichnet, dass** der jeweilige Frequenzgang (17, 19) mittels eines vom Lautsprecher (11) ausgestrahlten Chirps gemessen wird.

7. Verfahren nach einem der Ansprüche 1 bis 5, **dadurch gekennzeichnet, dass** der jeweilige Frequenzgang (17, 19) mittels eines vom Lautsprecher ausgestrahlten Dirac-Impulses gemessen wird.

8. Verfahren nach einem der Ansprüche 1 bis 7, **dadurch gekennzeichnet, dass** die jeweilige Signalenergie (E, Eᵢ) durch Absolutwertbildung des Differenz-Frequenzgangs (21) und Integration über den jeweiligen Frequenzbereich berechnet wird.

9. Verfahren nach einem der Ansprüche 1 bis 8, **dadurch gekennzeichnet, dass** der Referenz-Frequenzgang (17) und der aktuelle Frequenzgang (19) jeweils über mehrere Einzelmessungen gemittelt werden.

10. Vorrichtung zum Detektieren und Klassifizieren einer Störstelle (F) eines Gehäuses (2), insbesondere für ein elektronisches Gerät, umfassend:
zumindest einen Lautsprecher (11) und zumindest ein Mikrophon (12) zur Anordnung im Innenraum (3) des Gehäuses (2); und
einen an diesen Lautsprecher (11) angeschlossenen Signalgenerator (14) und eine an dieses Mikrophon (12) angeschlossene Auswerteschaltung (15);
dadurch charakterisiert,
dass die Auswerteschaltung (15) dafür ausgebildet ist,
einen Referenz-Frequenzgang (17) der Schallübertragung (13) von diesem Lautsprecher (11) zu diesem Mikrophon (12) zu messen,
zu einem späteren Zeitpunkt einen aktuellen Frequenzgang (19) der Schallübertragung (13) von diesem Lautsprecher (11) zu diesem Mikrophon (12) zu messen,
einen Differenz-Frequenzgang (21) als Abweichung zwischen dem aktuellen Frequenzgang (19) und dem Referenz-Frequenzgang (17) sowie ein Maß (M) des Differenz-Frequenzgangs (21) zu ermitteln und, wenn dieses Maß (M) einen vorgegebenen Detektionsschwellwert (D) übersteigt:
eine Störstelle (F) zu detektieren,
ein Verhältnis (R) der Signalenergie (Eᵢ₊ₖ) eines hochfrequenten Frequenzbands (Bᵢ₊ₖ) des Differenz-Frequenzgangs (21) zur Signalenergie (Eᵢ) eines niederfrequenten Frequenzbands (Bᵢ) des Differenz-Frequenzgangs (21) zu berechnen und,
wenn das Verhältnis (R) einen vorgegebenen Klassifikationsschwellwert (C) übersteigt:
die Störstelle (F) als Fremdkörper (8 - 10) im Gehäuse (2) zu klassifizieren,
andernfalls die Störstelle (F) als Fehlstelle (5 - 7) im Gehäuse (2) zu klassifizieren.

11. Vorrichtung nach Anspruch 10, **dadurch gekennzeichnet, dass** das niederfrequente Frequenzband (Bᵢ) unterhalb von 400 - 500 Hz und das hochfrequente Frequenzband (Bᵢ₊ₖ) oberhalb von 400 - 500 Hz liegt.

12. Vorrichtung nach Anspruch 10 oder 11, **dadurch gekennzeichnet, dass** das niederfrequente Frequenzband (Bᵢ) 250 Hz bis 450 Hz und das hochfrequente Frequenzband (Bᵢ₊ₖ) 450 Hz bis 2 kHz ist.

13. Vorrichtung nach einem der Ansprüche 10 bis 12, **dadurch gekennzeichnet, dass** die Auswerteschaltung ferner dafür ausgebildet ist, aus dem genannten Maß (M) die Größe der Störstelle (F) zu bestimmen.

14. Vorrichtung nach einem der Ansprüche 10 bis 13, **dadurch gekennzeichnet, dass** der Signalgenerator (14) einen Chirp erzeugt.

15. Vorrichtung nach einem der Ansprüche 10 bis 13, **dadurch gekennzeichnet, dass** der Signalgenerator (14) einen Dirac-Impuls erzeugt.

## Claims

1. A method for detecting and classifying a fault (F) of a housing (2), in particular for an electronic device, comprising:
arranging at least one loudspeaker (11) and at least one microphone (12) in the interior (3) of the housing (2);
**characterized by**
measuring a reference frequency response (17) of the sound transmission (13) from this loudspeaker (11) to this microphone (12) ;
at a later point in time, measuring a present frequency response (19) of the sound transmission (13) from this loudspeaker (11) to this microphone (12);
determining a difference frequency response (21) as a deviation between the present frequency response (19) and the reference frequency response (17); and
determining a measure (M) of the difference frequency response (21), and, if this measure exceeds a predetermined detection threshold (D):
detecting a fault (F),
calculating a ratio (R) of the signal energy (Eᵢ₊ₖ) of a high-frequency frequency band (Bᵢ₊ₖ) of the difference frequency response (21) to the signal energy (Eᵢ) of a low-frequency frequency band (Bi) of the difference frequency response (21), and
if the ratio (R) exceeds a predetermined classification threshold (C):
then classifying the fault (F) as a foreign object (8 - 10) in the housing (2),
otherwise, classifying the fault (F) as a defect (5 - 7) in the housing (2).

2. The method according to claim 1, **characterized in that** the low-frequency frequency band (Bᵢ) lies below 400 - 500 Hz and the high-frequency frequency band (Bᵢ₊ₖ) lies above 400 - 500 Hz.

3. The method according to claim 1 or 2, **characterized in that** the low-frequency frequency band (Bᵢ) is 250 Hz to 450 Hz and the high-frequency frequency band (Bᵢ₊ₖ) is 450 Hz to 2 kHz.

4. The method according to any one of claims 1 to 3, **characterized in that** said measure (M) is the total signal energy (E) of the difference frequency response (21).

5. The method according to any one of claims 1 to 4, **characterized in that** the size of the fault (F) is determined from said measure (M).

6. The method according to any one of claims 1 to 5, **characterized in that** the respective frequency response (17, 19) is measured using a chirp emitted by the loudspeaker (11).

7. The method according to any one of claims 1 to 5, **characterized in that** the respective frequency response (17, 19) is measured using a Dirac pulse emitted by the loudspeaker.

8. The method according to any one of claims 1 to 7, **characterized in that** the respective signal energy (E, Eᵢ) is calculated by forming the absolute value of the difference frequency response (21) and integrating over the respective frequency range.

9. The method according to any one of claims 1 to 8, **characterized in that** the reference frequency response (17) and the present frequency response (19) are respectively averaged over a plurality of individual measurements.

10. A device for detecting and classifying a fault (F) of a housing (2), in particular for an electronic device, comprising:
at least one loudspeaker (11) and at least one microphone (12) for arrangement in the interior (3) of the housing (2); and
a signal generator (14) connected to this loudspeaker (11) and an evaluation circuit (15) connected to this microphone (12) ;
**characterized in that**
the evaluation circuit (15) is configured to:
measure a reference frequency response (17) of the sound transmission (13) from this loudspeaker (11) to this microphone (12) ;
measure a present frequency response (19) of the sound transmission (13) from this loudspeaker (11) to this microphone (12) at a later point in time;
determine a difference frequency response (21) as a deviation between the present frequency response (19) and the reference frequency response (17) as well as a measure (M) of the difference frequency response (21), and, if this measure (M) exceeds a predetermined detection threshold (D):
to detect a fault (F);
to calculate a ratio (R) of the signal energy (Eᵢ₊ₖ) of a high-frequency frequency band (Bᵢ₊ₖ) of the difference frequency response (21) to the signal energy (Eᵢ) of a low-frequency frequency band (Bi) of the difference frequency response (21), and,
if the ratio (R) exceeds a predetermined classification threshold (C):
to classify the fault (F) as a foreign object (8 - 10) in the housing (2),
otherwise, to classify the fault (F) as a defect (5 - 7) in the housing (2).

11. The device according to claim 10, **characterized in that** the low-frequency frequency band (Bᵢ) lies below 400 - 500 Hz and the high-frequency frequency band (Bᵢ₊ₖ) lies above 400 - 500 Hz.

12. The device according to claim 10 or 11, **characterized in that** the low-frequency frequency band (Bᵢ) is 250 Hz to 450 Hz and the high-frequency frequency band (Bᵢ₊ₖ) is 450 Hz to 2 kHz.

13. The device according to any one of claims 10 to 12, **characterized in that** the evaluation circuit is further configured to determine the size of the fault (F) from said measure (M) .

14. The device according to any one of claims 10 to 13, **characterized in that** the signal generator (14) generates a chirp.

15. The device according to any one of claims 10 to 13, **characterized in that** the signal generator (14) generates a Dirac pulse.

## Revendications

1. Procédé de détection et de classification d'une perturbation (F) d'un bâti (2), en particulier pour un appareil électronique, comprenant :
la mise en place d'au moins un haut-parleur (11) et d'au moins un microphone (12) dans l'espace intérieur (3) du bâti (2) ;
**caractérisé par**
la mesure d'une réponse en fréquence de référence (17) de la transmission du son (13) de cet haut-parleur (11) vers ce microphone (12) ;
à un instant plus tard, la mesure d'une réponse en fréquence actuelle (19) de la transmission du son (13) de cet haut-parleur (11) vers ce microphone (12) ;
la détermination d'une réponse en fréquence de différence (21) sous la forme d'un écart entre la réponse en fréquence actuelle (19) et la réponse en fréquence de référence (17) ; et
la détermination d'une mesure (M) de la réponse en fréquence de différence (21) et, lorsque celle-ci dépasse une valeur limite de détection (D) prédéfinie :
la détection d'une perturbation (F),
le calcul d'un rapport (R) de l'énergie de signal (Eᵢ₊ₖ) d'une bande de fréquence de haute fréquence (Bᵢ₊ₖ) de la réponse en fréquence de différence (21) par rapport à l'énergie de signal (Eᵢ) d'une bande de fréquence de basse fréquence (Bᵢ) de la réponse en fréquence de différence (21), et
lorsque le rapport (R) dépasse une valeur limite de classification (C) prédéfinie :
la classification de la perturbation (F) comme un corps étranger (8 - 10) dans le bâti (2),
autrement, la classification de la perturbation (F) comme un défaut (5 - 7) dans le bâti (2).

2. Procédé selon la revendication 1, **caractérisé en ce que** la bande de fréquence de basse fréquence (Bᵢ) se situe en-dessous de 400 - 500 Hz et la bande de fréquence de haute fréquence (Bᵢ₊ₖ) se situe au-dessus de 400 - 500 Hz.

3. Procédé selon la revendication 1 ou 2, **caractérisé en ce que** la bande de fréquence de basse fréquence (Bᵢ) est de 250 à 450 Hz et la bande de fréquence de haute fréquence (Bᵢ₊ₖ) est de 450 à 2 kHz.

4. Procédé selon l'une des revendications 1 à 3, **caractérisé en ce que** ladite mesure (M) est l'énergie de signal (E) totale de la réponse en fréquence de différence (21).

5. Procédé selon l'une des revendications 1 à 4, **caractérisé en ce que** l'ampleur de la perturbation (F) est déterminée à partir de ladite mesure (M).

6. Procédé selon l'une des revendications 1 à 5, **caractérisé en ce que** la réponse en fréquence (17, 19) respective est mesurée au moyen d'un chirp émis par le haut-parleur (11).

7. Procédé selon l'une des revendications 1 à 5, **caractérisé en ce que** la réponse en fréquence (17, 19) respective est mesurée au moyen d'une impulsion de Dirac émise par le haut-parleur.

8. Procédé selon l'une des revendications 1 à 7, **caractérisé en ce que** l'énergie de signal (E, Eᵢ) respective est calculée par la formation de la valeur absolue de la réponse en fréquence de différence (21) et l'intégration sur le domaine de fréquences respectif.

9. Procédé selon l'une des revendications 1 à 8, **caractérisé en ce que** la réponse en fréquence de référence (17) et la réponse en fréquence actuelle (19) sont moyennées respectivement sur plusieurs mesures individuelles.

10. Dispositif de détection et de classification d'une perturbation (F) d'un bâti (2), en particulier pour un appareil électronique, comprenant :
au moins un haut-parleur (11) et au moins un microphone (12) pour la mise en place dans l'espace intérieur (3) du bâti (2) ; et
un générateur de signaux (14) connecté à ce haut-parleur (11) et un circuit d'exploitation (15) connecté à ce microphone (12) ;
**caractérisé en ce que**
le circuit d'exploitation (15) est conçu
pour mesurer une réponse en fréquence de référence (17) de la transmission du son (13) de cet haut-parleur (11) vers ce microphone (12),
pour mesurer, à un instant plus tard, une réponse en fréquence actuelle (19) de la transmission du son (13) de cet haut-parleur (11) vers ce microphone (12),
pour déterminer une réponse en fréquence de différence (21) sous la forme d'un écart entre la réponse en fréquence actuelle (19) et la réponse en fréquence de référence (17) ainsi qu'une mesure (M) de la réponse en fréquence de différence (21) et, lorsque cette mesure (M) dépasse une valeur limite de détection (D) prédéfinie :
pour détecter une perturbation (F),
pour calculer un rapport (R) de l'énergie de signal (Eᵢ₊ₖ) d'une bande de fréquence de haute fréquence (Bᵢ₊ₖ) de la réponse en fréquence de différence (21) par rapport à l'énergie de signal (Eᵢ) d'une bande de fréquence de basse fréquence (Bᵢ) de la réponse en fréquence de différence (21), et
lorsque le rapport (R) dépasse une valeur limite de classification (C) prédéfinie :
pour classifier la perturbation (F) comme un corps étranger (8 - 10) dans le bâti (2),
autrement, pour classifier la perturbation (F) comme un défaut (5 - 7) dans le bâti (2).

11. Dispositif selon la revendication 10, **caractérisé en ce que** la bande de fréquence de basse fréquence (Bᵢ) se situe en-dessous de 400 - 500 Hz et la bande de fréquence de haute fréquence (Bᵢ₊ₖ) se situe au-dessus de 400 - 500 Hz.

12. Dispositif selon la revendication 10 ou 11, **caractérisé en ce que** la bande de fréquence de basse fréquence (Bᵢ) est de 250 à 450 Hz et la bande de fréquence de haute fréquence (Bᵢ₊ₖ) est de 450 à 2 kHz.

13. Dispositif selon l'une des revendications 10 à 12, **caractérisé en ce que** le circuit d'exploitation est en outre conçu pour déterminer l'ampleur de la perturbation (F) à partir de ladite mesure (M).

14. Dispositif selon l'une des revendications 10 à 13, **caractérisé en ce que** le générateur de signaux (14) génère un chirp.

15. Dispositif selon l'une des revendications 10 à 13, **caractérisé en ce que** le générateur de signaux (14) génère une impulsion de Dirac.
